# DEMANDE DE BREVET EUROPEEN

(11) **EP 4 789 841 A1**
(43) Date de publication de la demande: **12.08.2026**
(21) Numéro de dépôt: 25218742.2
(22) Date de dépôt: 26.11.2025
(51) Int. Cl.: B29C 49/42, B29C 49/06, B29C 49/36

(54) **INSTALLATION DE FABRICATION DE RECIPIENTS EQUIPEE D'UN DISPOSITIF D' ASPIRATION**

(30) Priorité: 10.02.2025 FR 2501305
(71) Demandeur: Sidel Participations, 76930 Octeville-sur-Mer (FR)
(72) Inventeur: TONGA, Jonas, 43126 Parma (IT); EDDE, Matthieu, 76930 OCTEVILLE-SUR-MER (FR)
(74) Mandataire: Sidel Group

(57) **Abrégé**

L'invention concerne une installation (10) de fabrication de récipients en matériau thermoplastique, en particulier de bouteilles, l'installation (10) comportant au moins un dispositif (34) de convoyage de corps (12) creux munis d'un col (16) comportant :
- un châssis (36) fixe par rapport au sol ;
- au moins un organe (38) de préhension individuelle d'un corps (12) creux par son col (16) qui est mobile le long d'un trajet (30) de production ;
caractérisée en ce qu'elle comporte un dispositif (64) d'aspiration comportant au moins une buse (66) d'aspiration qui est montée sur un élément (67) de structure fixe par rapport au châssis (36) et qui est agencée à proximité d'une zone (63) déterminée du trajet des cols (16) corps (12) creux pour aspirer des poussières générées par frottement des corps (12) creux lors de leur passage dans ladite zone (63) déterminée sans interférer avec leur passage.

## Description

### Domaine technique de l'invention

L'invention concerne une installation de fabrication de récipients en matériau thermoplastique, en particulier de bouteilles, l'installation comportant au moins un dispositif de convoyage de corps creux munis d'un col comportant :
- un châssis fixe par rapport au sol ;
- au moins un organe de préhension individuelle d'un corps creux par son col qui est mobile le long d'un trajet de production.

### Arrière-plan technique

Il est connu de fabriquer des récipients par formage, notamment par étirage-soufflage, de préformes en matériau thermoplastique, notamment en polyéthylène téréphtalate (PET) ou en polypropylène (PP) dans une installation de fabrication.

Dans la suite de la description et dans les revendications, on utilisera le terme générique « corps creux » pour désigner indifféremment une préforme ou un récipient.

La fabrication de récipients en grande série est réalisée dans une installation de fabrication dans laquelle les corps creux défilent le long d'un trajet de production prédéterminé. Chaque corps creux est pris en charge par une succession de dispositifs de convoyage qui comportent des organes de préhension de chaque corps creux individuellement. Les corps creux sont ainsi maintenus individuellement pendant tout le trajet de production depuis un point d'entrée dans l'installation, à l'état de préforme, jusqu'à un point de sortie de l'installation, à l'état de récipient. Lorsque les préformes, préalablement moulées, sont livrées, elles sont généralement en vrac. Il est donc connu d'agencer un dispositif pour redresser et aligner les préformes à l'entrée de l'installation, directement en amont du point d'entrée.

Le matériau formant les préformes est généralement dans un état amorphe qui n'est pas apte à permettre leur formage à froid. Préalablement à l'opération de formage, les préformes sont donc chauffées à une température supérieure ou égale à une température de transition vitreuse qui permet leur conformation en récipient final.

Plus particulièrement, les préformes présentent généralement un corps sensiblement cylindrique de révolution à paroi tubulaire épaisse qui est fermé à l'une de ses extrémités axiales par un fond à paroi épaisse, et qui est prolongé à son autre extrémité par un col, lui aussi tubulaire. Le col est conformé à sa forme et à ses dimensions définitives tandis que le corps de la préforme est destiné à subir une déformation relativement importante pour le conformer en récipient lors d'une étape de formage.

Pour cette raison il est préférable que seul le corps de la préforme soit chauffé à une température de consigne qui est supérieure à la température de transition vitreuse, le col demeurant à une température inférieure à ladite température de transition vitreuse pour éviter sa déformation pendant la fabrication du récipient.

Une telle installation de production comporte donc une unité de conditionnement thermique qui permet, lors d'une étape de chauffage, de rendre malléable le corps de la préforme par chauffage à la température de consigne. Lors de l'étape de chauffage, chaque préforme est exposée à un rayonnement chauffant lors de son déplacement. La puissance du rayonnement chauffant est commandée de manière à permettre de chauffer le corps des préformes à une température supérieure ou égale à la température de consigne.

L'installation de production comporte aussi une unité de formage qui est agencée en aval de l'unité de conditionnement thermique selon le sens de circulation des préformes dans l'installation de production. Lors d'une étape de formage, la préforme chaude est placée dans un poste de formage, par exemple dans un moule de l'unité de formage qui présente une empreinte de moulage conforme au récipient à obtenir. Un fluide sous pression, tel que de l'air, est alors injecté dans le corps malléable de la préforme afin d'en plaquer la paroi contre l'empreinte du moule. Généralement, l'injection de fluide sous pression est précédée et/ou accompagnée d'un étirage axial de la préforme, notamment au moyen d'une tige d'étirage insérée dans la préforme. De manière connue, le corps est ainsi soumis à un étirage biaxial. Les corps creux à l'état de récipients finaux qui sortent de l'unité de formage sont ensuite acheminés jusqu'à une sortie de l'installation de fabrication par un dispositif de convoyage. L'installation de fabrication est généralement combinée avec une installation de remplissage et de bouchage des récipients qui est agencée directement en aval du point de sortie. Avantageusement, les corps creux passent du dernier dispositif de convoyage de l'installation de fabrication jusqu'au premier dispositif de convoyage de l'installation de remplissage de manière continue en étant toujours maintenus individuellement. L'opération de remplissage doit être réalisée dans une zone stérile pour éviter que des contaminants n'entrent dans le récipient lors du remplissage. Les conditions de stérilités sont particulièrement strictes dans le cadre de remplissage des récipients avec des produits alimentaires.

A cet effet, il est déjà connu d'enfermer le dispositif de remplissage dans une enceinte à atmosphère contrôlée. L'atmosphère de l'enceinte est maintenue en surpression pour éviter l'entrée de poussière et l'air insufflé dans l'enceinte est filtré.

Des mesures similaires sont prises dans l'enceinte de l'unité de formage pour éviter que les récipients ne soient contaminés entre la sortie de l'unité de formage et le point de sortie de l'installation.

Ces mesures permettent de respecter les normes alimentaires de manière tout à fait satisfaisante. L'invention propose d'aller encore plus loin dans la prévention des risques sanitaires en réduisant le risque de contamination des corps creux par des poussières même en quantité négligeable d'un point de vue sanitaire.

On a constaté que le frottement répété des récipients contre avec des éléments de certains dispositifs de convoyage pouvait provoquer la génération de poussières microscopiques de matériau thermoplastique par abrasion imperceptible du récipient. Par exemple, il s'agit d'une face de guidage fixe contre laquelle les récipients viennent en contact, lors de leur déplacement. Selon un autre exemple, lorsque les récipients sont portés par des pinces, et que, lors de leur transfert au dispositif suivant, les récipients sont tirés hors de l'emprise des pinces, cela crée un frottement entre le récipient et des mors de la pince.

Bien que la quantité de matériau retirée à chaque passage soit extrêmement faible, le passage répété de milliers de corps creux lors de la production en grande série génère une quantité non négligeable de poussières. Bien qu'une une majeure partie de ces poussières soit évacuée par un système d'aération continue de l'atmosphère, certaines de ces poussières restent piégées, par exemple par adhérence due à l'électricité statique, sur les corps creux. Les corps creux embarquent une partie de ces poussières dans l'enceinte du dispositif de remplissage.

En outre, une partie de ces poussières peut pénétrer à l'intérieur du corps creux. Bien que le corps creux soit nettoyé en différents endroits de l'installation de fabrication, si les poussières pénètrent dans le corps creux juste avant son remplissage, elles risquent de se mélanger avec le produit remplissant le corps creux.

Pour éviter ces problèmes, il est connu de nettoyer régulièrement les différents éléments susceptibles de piéger les poussières avant qu'un niveau de contamination non conformes aux normes sanitaires ne soit atteint.

Bien que les quantités de poussière soient négligeables d'un point de vue sanitaire et que le risque que ces poussières se retrouvent à l'intérieur des récipients soit faible, il est préférable de trouver une solution pour écarter ce type de problème de manière permanente.

### Résumé de l'invention

L'invention propose une installation de fabrication de récipients en matériau thermoplastique, en particulier de bouteilles, l'installation comportant au moins un dispositif de convoyage de corps creux munis d'un col comportant :
- un châssis fixe par rapport au sol ;
- au moins un organe de préhension individuelle d'un corps creux par son col qui est mobile le long d'un trajet de production ; caractérisée en ce qu'elle comporte un dispositif d'aspiration comportant au moins une buse d'aspiration qui est montée sur un élément de structure fixe par rapport au châssis et qui est agencée à proximité d'une zone déterminée du trajet des cols corps creux pour aspirer des poussières générées par frottement des corps creux lors de leur passage dans ladite zone déterminée sans interférer avec leur passage.

Selon une autre caractéristique de l'installation réalisée selon les enseignements de l'invention, la buse d'aspiration présente une embouchure qui présente une forme longiligne allongée parallèlement au sens de déplacement des organes de préhension.

Selon une autre caractéristique de l'installation réalisée selon les enseignements de l'invention, la buse d'aspiration est montée mobile sur le châssis entre la position active d'aspiration dans laquelle elle est à proximité du trajet des organes de préhension pour permettre l'aspiration des poussières, et une position inactive de maintenance dans laquelle elle est écartée du trajet des organes de préhension.

Selon une autre caractéristique de l'installation réalisée selon les enseignements de l'invention, la buse d'aspiration est guidée en coulissement selon une direction orthogonale au plan du trajet de production.

Selon une autre caractéristique de l'installation réalisée selon les enseignements de l'invention, les déplacements de la buse d'aspiration entre sa position active et sa position inactive sont réalisés manuellement.

Selon une autre caractéristique de l'installation réalisée selon les enseignements de l'invention, les déplacements de la buse d'aspiration entre sa position active et sa position inactive sont réalisés automatiquement au moyen d'un actionneur.

Selon une autre caractéristique de l'installation réalisée selon les enseignements de l'invention, la buse d'aspiration est verrouillée dans chacune de ses positions active et inactive par un organe de blocage associé.

Selon une autre caractéristique de l'installation réalisée selon les enseignements de l'invention, le dispositif de convoyage comporte au moins une face de guidage fixe destinée à guider par contact le corps creux lors de son déplacement par l'organe de préhension, la zone déterminée étant formée par la portion de trajet des corps creux lors de laquelle les corps creux sont en contact avec la face de guidage.

Selon une autre caractéristique de l'installation réalisée selon les enseignements de l'invention, le dispositif de convoyage comporte une roue tournante sur le châssis munie d'une pluralité d'organes de préhension régulièrement répartis à sa périphérie.

Selon une autre caractéristique de l'installation réalisée selon les enseignements de l'invention, chaque organe de préhension est formé par une encoche ouverte radialement vers l'extérieur.

Selon une autre caractéristique de l'installation réalisée selon les enseignements de l'invention, elle comporte une unité de formage des corps creux à l'état de récipient à partir de corps creux à l'état de préformes, le dispositif de convoyage étant agencé en aval de l'unité de formage.

Selon une autre caractéristique de l'installation réalisée selon les enseignements de l'invention, l'unité de formage est confinée dans une enceinte de laquelle les corps creux sortent par une fenêtre de passage, le dispositif de convoyage acheminant les corps creux directement jusqu'à la fenêtre de passage.

### Brève description des figures

D'autres caractéristiques et avantages de l'invention apparaitront au cours de la lecture de la description détaillée qui va suivre pour la compréhension de laquelle on se reportera aux dessins annexés brièvement décrites ci-après.
La figure 1 est une vue de dessus qui représente schématiquement une installation de fabrication de récipients réalisée selon les enseignements de l'invention.
La figure 2 est une vue de côté qui représente une préforme destinée à être transformée en récipient par l'installation de fabrication de la figure 1.
La figure 3 est une vue en perspective qui représente uniquement un dispositif de convoyage de l'installation de fabrication de la figure 1.
La figure 4 est une vue en coupe selon le plan de coupe 4-4 de la figure 5 qui représente le dispositif de convoyage de la figure 3 convoyant un corps creux et équipé d'un dispositif d'aspiration réalisé selon les enseignements de l'invention.
La figure 5 est une vue en perspective qui représente une partie de l'installation de fabrication de la figure 1, dans laquelle seul le dispositif de convoyage de la figure 4 équipé du dispositif d'aspiration a été représenté, les autres dispositifs de convoyage de l'installation ayant été effacé pour des raisons de clarté du dessin.
La figure 6 est une vue de détail à plus grande échelle de la figure 5 qui représente une buse du dispositif d'aspiration agencée au-dessus d'un guide du dispositif de convoyage.
La figure 7 est une vue en perspective qui représente uniquement la buse du dispositif d'aspiration de la figure 5.
La figure 8 est une vue de côté qui représente la buse du dispositif d'aspiration dans une première position active basse.
La figure 9 est une vue similaire à celle de la figure 8 qui représente la buse dans une deuxième position inactive haute.
La figure 10 est une vue en perspective qui représente un dispositif de guidage de la buse entre sa position active et sa position inactive.

### Description détaillée de l'invention

Dans la suite de la description, on adoptera à titre non limitatif les orientations longitudinale, verticale et transversale en référence au trièdre (L, V, T) représenté sur les figures.

La direction verticale est ici dirigée selon le sens de gravité terrestre.

On utilisera également à titre non limitatif les termes « avant » et « arrière » en référence à l'orientation longitudinale, ainsi que « supérieur » et « inférieur » ou « haut » et « bas » en référence à l'orientation verticale et enfin « gauche » et « droite » en référence à l'orientation transversale.

Les termes « amont » ou « aval » sont respectivement utilisés par rapport au sens de circulation des corps creux, préformes ou récipients, convoyés par les roues du système de convoyage à travers l'installation de fabrication.

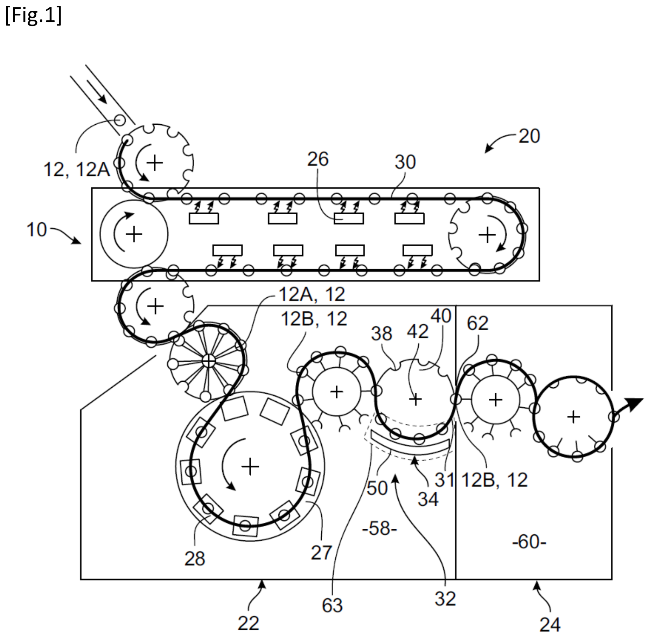

On a représenté sur la figure 1 un exemple de réalisation d'une installation 10 de fabrication de récipients 12B en matière thermoplastique.

La fabrication de récipients 12B tels que des bouteilles est réalisée à partir de préformes 12A notamment obtenues par moulage par injection. Par la suite, les préformes 12A et les récipients 12B seront désignés sous le terme commun « corps 12 creux ».

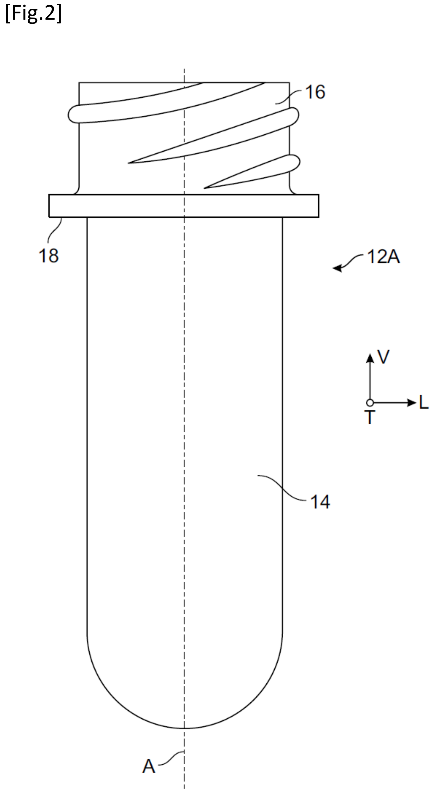

Un exemple de préforme 12A destinée à être utilisée avec l'installation 10 de fabrication est illustré à la figure 2. Une telle préforme 12A est réalisée en matériau thermoplastique, par exemple en polyéthylène téréphtalate (PET) ou en polypropylène (PP). Elle est classiquement obtenue par moulage par injection. Elle présente une forme sensiblement axisymétrique autour d'un axe "A" principal représenté verticalement à la figure 2.

Elle comporte un corps 14 en forme de tube allongé selon l'axe "A" principal présentant une extrémité axiale fermée et qui présente à son extrémité opposée, représentée en haut à la figure 2, un col 16 ouvert axialement. Dans l'exemple représenté à la figure 2, le col 16 comporte, à la jonction avec le corps 14, une collerette 18 qui s'étend radialement en saillie par rapport au reste de la préforme 12A.

Le col 16 présente sa forme définitive, tandis que le corps 14 est destiné à être étiré lors d'une opération ultérieure de formage pour former le corps du récipient 12B fini.

L'installation 10 de fabrication comporte principalement une unité 20 de conditionnement thermique et une unité 22 de formage. L'installation 10 de fabrication est ici couplée avec une unité 24 de traitement agencée directement en aval de l'unité 22 de formage. Ladite unité 24 de traitement est de préférence une unité de remplissage, mais cela pourrait aussi être une unité d'étiquetage ou tout autre unité adaptée pour traiter les récipients 12B juste après leur formage.

L'unité 20 de conditionnement thermique est destinée à conditionner thermiquement le corps 14 des préformes 12A par des organes 26 de chauffage tels que des lampes infrarouges ou des diodes laser. Les préformes 12A ainsi chauffées sont ensuite introduites dans des moules 28 de l'unité 22 de formage dans lesquels leur transformation par soufflage ou par étirage-soufflage en récipients 12B est réalisée.

L'unité 22 de formage comporte ici un carrousel 27 tournant à la périphérie duquel les moules 28 sont agencés pour que l'opération de formage interviennent pendant le déplacement des corps 12 creux.

Dans l'exemple de réalisation, les récipients 12B obtenus sont transférés vers l'unité 24 de traitement agencée directement en aval.

Dans cette installation 10 de fabrication, les corps 12 creux sont déplacés en file le long d'un trajet commun, dit trajet 30 de production jusqu'à un point 31 de sortie de l'installation 10 de fabrication. Le long de ce trajet 30 de production, chaque corps 12 creux est maintenu individuellement par son col 16, et notamment au moyen de leur collerette 18, par des moyens de préhension d'un système 32 de convoyage. Cela permet d'éviter que les corps 12 creux ne soient en contact les uns avec les autres et cela permet aussi de connaître précisément leur position pour subir les différents traitements nécessaires à la fabrication du récipient 12B.

Les préformes 12A comme les récipients 12B constituent des objets identiques à convoyer car muni d'un même col 16.

Lors de leur convoyage par un tel système 32 de convoyage à travers l'installation 10 de fabrication, le corps 12 creux est soit supporté par l'intermédiaire de sa collerette 18, soit saisi par son col 16 par une pince, par exemple au niveau d'une gorge annulaire (non représentée) située verticalement au-dessus de la collerette 18.

Pour assurer le convoyage des corps 12 creux, le système 32 de convoyage comporte une pluralité de dispositifs de convoyage qui sont agencés pour transporter successivement lesdits corps 12 creux à travers l'installation 10 de fabrication, le long du trajet 30 de production.

A titre d'exemple non limitatif, le système 32 de convoyage comporte ici des dispositifs de convoyage de type rotatifs, représentés schématiquement sur la figure 1.

Dans l'exemple, les dispositifs de convoyage du système 32 de convoyage sont aptes à assurer le convoyage des corps 12 creux d'une unité à la suivante.

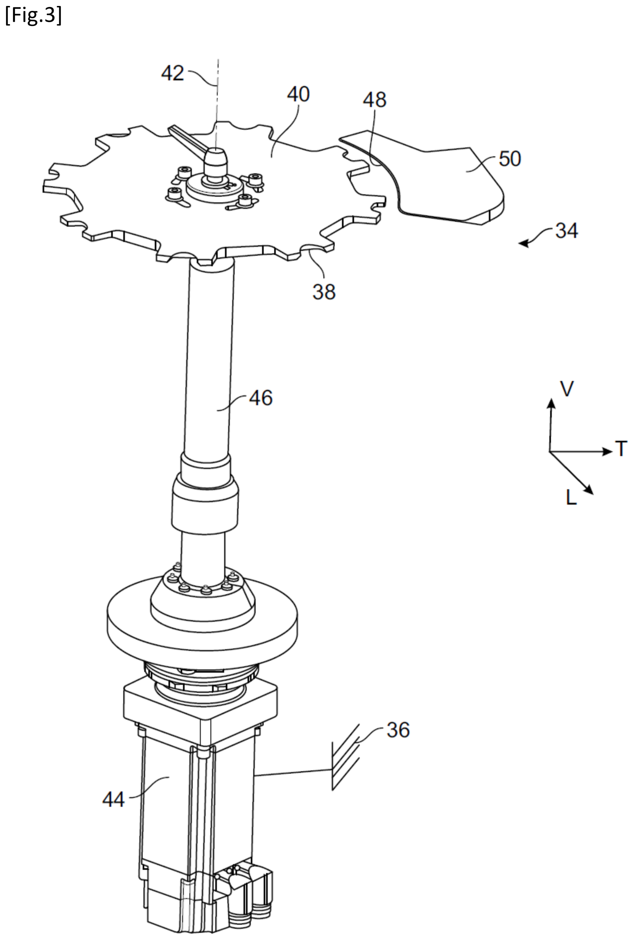

On décrit plus particulièrement le dispositif 34 de convoyage représenté à la figure 3. Un tel dispositif 34 de convoyage comporte principalement un châssis 36 fixe par rapport au sol, ici représenté schématiquement.

Le dispositif 34 de convoyage comporte au moins un organe 38 de préhension individuelle d'un corps 12 creux par son col 16 qui est mobile le long d'une portion du trajet 30 de production. De préférence, le dispositif 34 de convoyage comporte une pluralité d'organes 38 de préhension.

Chaque organe 38 de préhension est entraîné en déplacement le long d'un circuit fermé. Sur une portion du circuit, chaque organe 38 de préhension embarque un corps 12 creux, tandis que sur le reste du circuit, l'organe 38 de préhension circule à vide pour revenir saisir un nouveau corps 12 creux.

Les organes 38 de préhension sont entraînés en déplacement le long de leur circuit fermé par des moyens motorisés.

Le circuit fermé est ici de forme circulaire.

Le dispositif 34 de convoyage comporte une roue 40 montée tournante sur le châssis 36 et munie d'une pluralité d'organes 38 de préhension régulièrement répartis à sa périphérie.

Dans les exemples représentés aux figures, la roue 40 est tournante autour d'un axe 42 central par rapport au châssis 36. Ici, l'axe 42 central est orienté verticalement et la roue 40 s'étend dans un plan horizontal.

La roue 40 est ici entraînée en rotation par un moteur 44 par l'intermédiaire d'un arbre 46 central. Le moteur 44 est fixé au châssis 36.

L'organe 38 de préhension embarque le corps 12 creux soit en supportant sa collerette 18, soit en le saisissant au niveau du col 16.

Dans le mode de réalisation représenté aux figures, chaque organe 38 de préhension est formé par une encoche réalisée dans un bord périphérique externe de la roue 40. Chaque encoche présente par exemple une forme en « U » radialement ouverte vers l'extérieur.

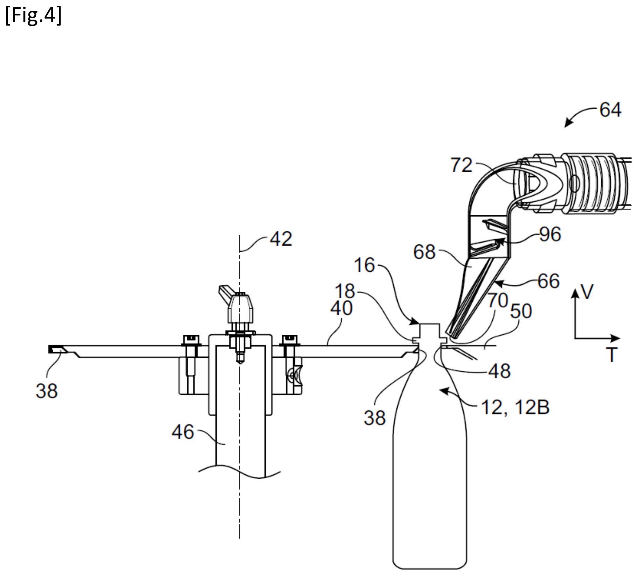

Les corps 12 creux sont introduits radialement dans l'organe 38 de préhension en forme d'encoche. Comme représenté à la figure 4, les corps 12 creux sont supportés par l'intermédiaire de leur collerette 18. A cet effet, la collerette 18 présente une largeur supérieure à celle de l'encoche de manière à être en appui sur une face supérieure de la roue 40 sur le pourtour de l'encoche. Un tel dispositif 34 de convoyage est parfois appelé pour cette raison « roue à encoches ».

La forme de chaque encoche formant l'organe 38 de préhension ne permet pas de retenir radialement le corps 12 creux. Pour éviter que les corps 12 creux ne soit éjecté de leur organe 38 de préhension, notamment par centrifugation lors de la rotation de la roue 40, Il est connu d'agencer au moins une face 48 de guidage fixe sur le châssis 36 pour guider par contact le corps 12 creux lors de son déplacement par l'organe 38 de préhension, et notamment pour le retenir radialement en position dans l'encoche formant l'organe 38 de préhension.

La face 48 de guidage est ici portée par un guide 50 qui est agencé le long du trajet des corps 12 creux transportés par les organes 38 de préhension. A cet effet, le guide 50 présente ici la forme d'un segment d'anneau.

Le guide 50 est agencé de manière que les organes 38 de préhension passent radialement en vis-à-vis de la face 48 de guidage. Plus particulièrement, les organes 38 de préhension et le guide 50 sont ici agencés dans un même plan horizontal.

La face 48 de guidage est formée au moins par le bord intérieur du guide 50 qui coopère avec la partie du corps 12 creux située directement au-dessous du col 16 pour l'empêcher de sortir radialement.

La face 48 de guidage peut aussi comporter la face supérieure du guide 50 au niveau de son pourtour intérieur. La face supérieure du guide 50 permet ainsi de participer au support du corps 12 creux en servant d'appui pour la collerette 18, comme représenté à la figure 4.

En variante non représentée de l'invention, les organes 38 de préhension sont formés par des pinces qui sont agencées à la périphérie de la roue 40 tournante. Chaque pince est apte à saisir le corps 12 creux par son col 16, soit en dessous de la collerette 18, soit au-dessus de la collerette 18.

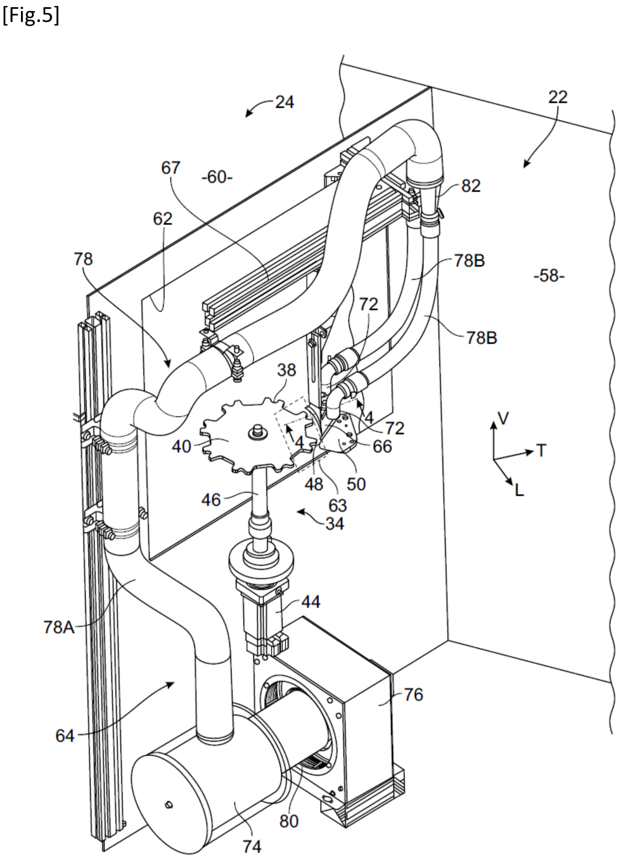

On a représenté sur la figure 5 une partie seulement de l'installation de la figure 1 située à cheval sur l'unité 22 de formage et l'unité 24 de traitement suivante, ici l'unité de remplissage.

Pour des raisons d'hygiène, l'unité 22 de formage est généralement enfermée dans une enceinte 58 qui est maintenue en surpression par rapport à la pression environnante pour éviter l'entrée de poussières et de particules polluantes.

Lorsque l'unité 24 de traitement suivante est une unité de remplissage, elle peut aussi être enfermée dans une enceinte 60 séparée et distincte de l'enceinte 58 de l'unité 22 de formage. L'enceinte 60 de l'unité 24 de traitement suivante est maintenue stérile par surpression par rapport à celle de l'unité 22 de formage car l'opération de remplissage doit être réalisée dans des conditions d'hygiène et de stérilisation très strictes.

Les récipients 12B passent de l'unité 22 de formage à l'unité 24 de traitement suivante en passant par une fenêtre 62 dont les dimensions sont ajustées pour laisser passer les récipients 12B tout en minimisant le risque d'entrée de particules polluantes. Dans le mode de réalisation représenté aux figures, le dispositif 34 de convoyage est agencé à l'intérieur de l'enceinte 58 de l'unité 22 de formage. Plus particulièrement, le dispositif 34 de convoyage est agencé en aval de l'unité 22 de formage.

Le dispositif 34 de convoyage forme ici le dernier dispositif de convoyage du trajet 30 de production qui achemine les corps 12 creux directement jusqu'à la fenêtre 62 de passage.

En variante, l'invention est applicable à un dispositif de convoyage qui est agencé à un autre endroit de l'installation 10 de fabrication.

On a constaté que le frottement des corps 12 creux contre certains éléments du dispositif 34 de convoyage lors de leur déplacement provoque la formation de poussières par abrasion imperceptible des corps 12 creux. Cette abrasion a lieu lorsque les corps 12 creux passent dans une zone 63 déterminée de leur trajet 30 de production. L'abrasion prend généralement place au niveau du col 16 des corps 12 creux.

En se référant à l'exemple représenté aux figures, l'abrasion est ici formé lorsque les corps 12 creux circulent au contact de la face 48 de guidage du dispositif 34 de convoyage. La zone 63 déterminée est alors formée par la portion de trajet des corps 12 creux lors de laquelle les corps 12 creux sont en contact avec la face 48 de guidage.

Selon une variante non représentée de l'invention, le dispositif 34 de convoyage comporte des pinces et l'abrasion a lieu lorsque les corps 12 creux sont transférés au dispositif de convoyage aval, notamment lorsque les corps 12 creux sont tirés hors de leur pince par un organe de préhension du dispositif de convoyage directement aval. Dans ce cas, les corps 12 creux frottent contre des mors de la pince, provoquant ladite abrasion génératrice de poussière. La zone 63 déterminée est alors formée par la portion de trajet des col 16 située au niveau du point de transfert des corps creux du dispositif de convoyage au dispositif de convoyage directement aval.

Cette poussière risque de polluer l'intérieur de l'enceinte 58.

En outre, lorsque cette poussière adhère aux récipients, notamment par attraction due à l'électricité statique, ces poussières risquent d'être importées dans l'enceinte 60 de l'unité 24 de traitement, ici de remplissage.

De plus, ces poussières risquent de pénétrer à l'intérieur du corps 12 creux et d'y rester piégées.

Pour résoudre ce problème, l'invention propose d'aspirer les poussières directement à l'endroit où elles sont générées.

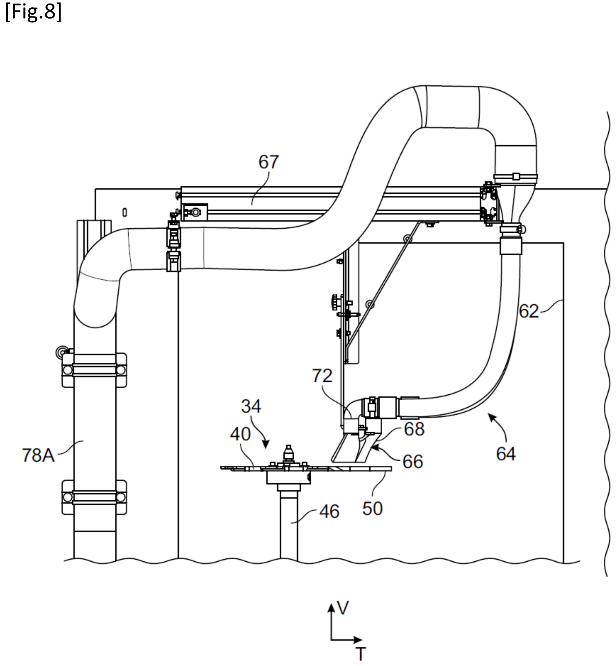

A cet effet, l'installation 10 de fabrication comporte un dispositif 64 d'aspiration comportant au moins une buse 66 d'aspiration, comme représenté aux figures 4 à 10. La buse 66 d'aspiration est montée sur un élément 67 de structure fixe par rapport au châssis 36 de manière à être maintenue à proximité du trajet des cols 16 corps 12 creux dans la zone 63 déterminée pour permettre d'aspirer les poussières générées par frottement des corps 12 creux sans interférer avec le passage des corps 12 creux.

La buse 66 est bien entendu agencée à l'extérieur des corps 12 creux et elle ne se déplace pas avec les corps 12 creux.

Dans le mode de réalisation représenté aux figures, la buse 66 est agencée à une distance suffisante de la face 48 de guidage pour permettre d'aspirer les poussières générées par frottement des corps 12 creux contre la face 48 de guidage sans interférer avec le passage des corps 12 creux.

La buse 66 d'aspiration est ici montée sur un élément de structure de l'enceinte 58. L'élément 67 de structure est ici une traverse du plafond de l'enceinte 58.

La buse 66 d'aspiration comporte principalement un corps 68 muni d'une embouchure 70 d'entrée par laquelle les poussières sont aspirées. L'embouchure 70 est agencée dans la zone 63 déterminée, à proximité du trajet des cols 16 des corps 12 creux. L'embouchure 70 d'entrée est ici agencée juste au-dessus de la face supérieure du guide 50.

Dans le mode de réalisation représenté aux figures 4 à 10, le dispositif 64 d'aspiration comporte une unique buse 66 d'aspiration.

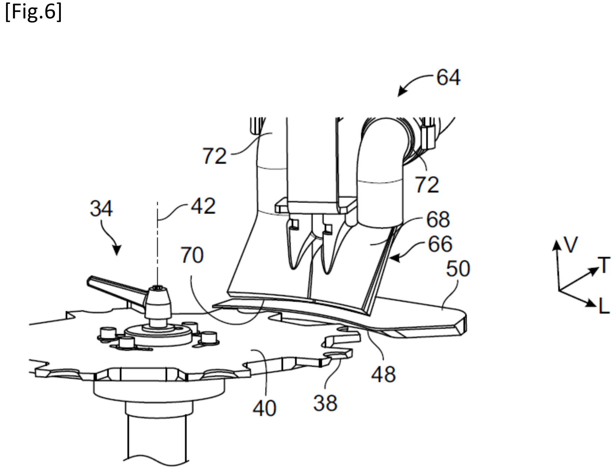

Pour pouvoir aspirer les poussières sensiblement tout le long de la face 48 de guidage, l'embouchure 70 présente une forme longiligne allongée parallèlement au sens de déplacement des organes 38 de préhension. L'embouchure 70 s'étend ici parallèlement à la face 48 de guidage, comme représenté à la figure 6

La buse 66 d'aspiration comporte aussi au moins un orifice 72 de sortie des poussières aspirées.

Le corps 68 de la buse 66 d'aspiration s'étend globalement verticalement et il est incliné de manière que l'embouchure 70 soit agencée à une extrémité inférieure à proximité du trajet des cols 16 des corps 12 creux, ici à proximité de la face 48 de guidage, tandis que l'au moins un orifice 72 de sortie est agencé verticalement au-dessus de l'embouchure 70 et il est décalé radialement vers l'extérieur, par rapport à l'axe 42 de rotation de la roue 40. Cette disposition permet de libérer un passage pour les corps 12 creux circulant le long du trajet de production tout en agençant l'embouchure 70 au plus proche de la zone 63 déterminée, ici au plus proche de la face 48 de guidage, comme représenté à la figure 4.

Comme représenté à la figure 5, le dispositif 64 d'aspiration comporte en outre, un collecteur 74 de poussières et une source 76 de dépression, telle qu'une pompe, par l'intermédiaire d'une tuyauterie 78.

A titre d'exemple non limitatif, la source 76 de dépression crée une dépression dans le collecteur 74 de poussières pour provoquer l'aspiration des poussières à travers la tuyauterie 78 et la buse 66 d'aspiration. **Il** est prévu des moyens, tel qu'un filtre 80 pour piéger les poussières dans le collecteur 74 de poussières et les empêcher de poursuivre leur route vers la source 76 de dépression.

La source 76 de dépression est avantageusement commandée de manière à pouvoir faire varier la valeur de la dépression et, en conséquence, la puissance d'aspiration. Cela permet de bénéficier d'une puissance d'aspiration suffisante pour aspirer les poussières sans toutefois provoquer un soulèvement des corps 12 creux.

La tuyauterie 78 comporte ici une conduite 78A principale d'aspiration qui est directement reliée à un orifice d'entrée du collecteur 74 de poussières. La conduite 78A principale est raccordée à l'au moins un orifice 72 de sortie des poussières de la buse 66 d'aspiration.

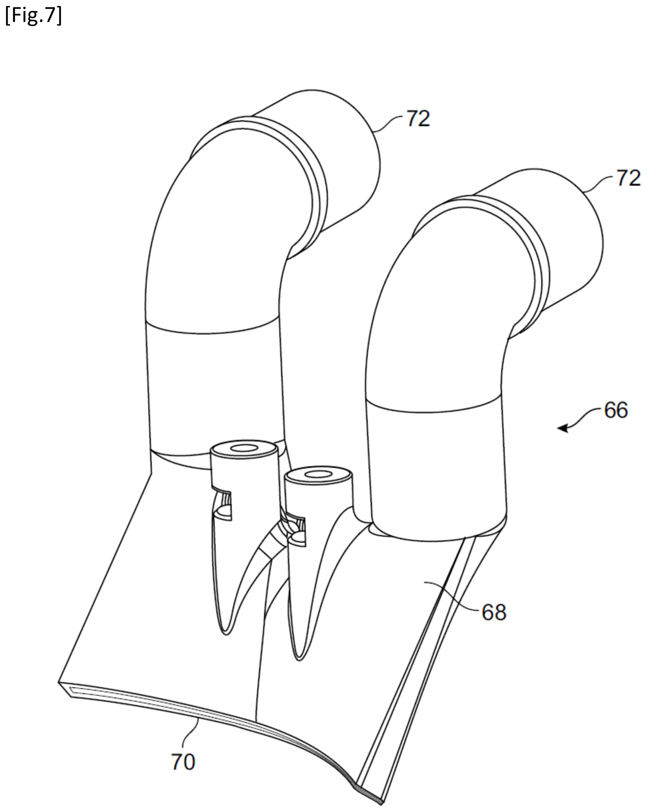

L'embouchure 70 présentant une forme allongée, **il** est préférable de bien répartir la force d'aspiration sur toute sa longueur. A cet effet, la buse 66 d'aspiration comporte une pluralité d'orifices 72 de sortie, ici deux, comme représenté à la figure 7. Les orifices 72 de sortie sont répartis régulièrement le long d'une ligne sensiblement parallèle à la forme allongée de l'embouchure 70.

A cet effet, chaque orifice 72 de sortie de la buse 66 d'aspiration est raccordé à la conduite 78A principale par l'intermédiaire d'une conduite 78B secondaire associée. Ainsi, la tuyauterie 78 comporte deux conduites 78B secondaires qui sont raccordées à la conduite 78A principale par un embranchement 82.

Les conduites 78B secondaires présentent chacune une section de passage inférieure à celle de la conduite 78A principale. Avantageusement, les sections de passage des conduites 78B secondaires sont sensiblement égale à la moitié de la section de passage de la conduite 78A principale pour éviter qu'il n'y ait une perte de force d'aspiration entre la conduite 78A principale et les conduites 78B secondaires.

En variante non représentée de l'invention, le dispositif 64 d'aspiration comporte une pluralité de buses qui sont réparties le long de la face 48 de guidage. Cette variante permet d'obtenir le même résultat qu'avec une unique buse en réalisant une aspiration régulière sur toute la longueur de la face 48 de guidage au moyen de plusieurs buses. Les buses peuvent alors être reliées entre elle, voire réalisées en une seule pièce.

En variante non représentée de l'invention, la buse 66 est raccordée directement à la conduite 78A principale par un unique orifice 72 de sortie. Cette disposition permet avantageusement de réduire les pertes de charge dues à des changements de section trop importants.

La buse 66 d'aspiration occupe une position active, représentée à la figure 4, 5, 6 et 8, pendant que l'installation 10 de fabrication fonctionne dans un mode de production dans lequel les corps 12 creux circulent le long du trajet de production en étant transportés par le dispositif 34 de convoyage.

Cependant, il est prévu de pouvoir remplacer certains éléments du dispositif 34 de convoyage, et notamment le guide 50 et la roue 40, pour les adapter au convoyage de corps 12 creux de différentes dimensions. Cette opération a lieu lorsque l'installation 10 de fabrication n'est pas en mode de production. A cet égard, il est préférable d'avoir un accès dégagé pour pouvoir démonter ces éléments.

En variante, lorsque le dispositif de convoyage comproet des pinces, il est prévu de pouvoir changer les pinces.

Il est donc prévu de pouvoir déplacer la buse 66 d'aspiration pour l'écarter des organes 38 de préhension lorsque l'installation 10 de fabrication ne produit pas de récipients.

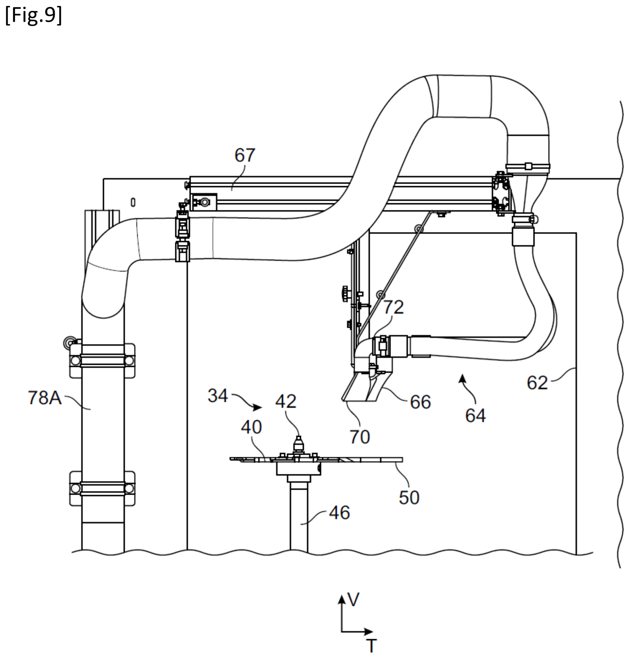

De préférence, la buse 66 d'aspiration est mobile entre la position active d'aspiration dans laquelle elle est à proximité des organes 38 de préhension pour permettre l'aspiration des poussières, et une position inactive de maintenance dans laquelle elle est écartée des organes de préhension, comme représenté à la figure 9. De préférence, la buse 66 d'aspiration est guidée lors de son déplacement entre ses deux positions.

Dans le mode de réalisation représenté aux figures, la buse 66 d'aspiration est guidée en coulissement selon une direction orthogonale au plan du trajet de production par l'intermédiaire d'un mécanisme de coulisse fixe par rapport au châssis 36. La position inactive est ici située verticalement au-dessus de la position active.

En variante non représentée de l'invention, la buse 66 d'aspiration peut aussi être montée pivotante ou bien selon une combinaison de pivotement et de coulissement.

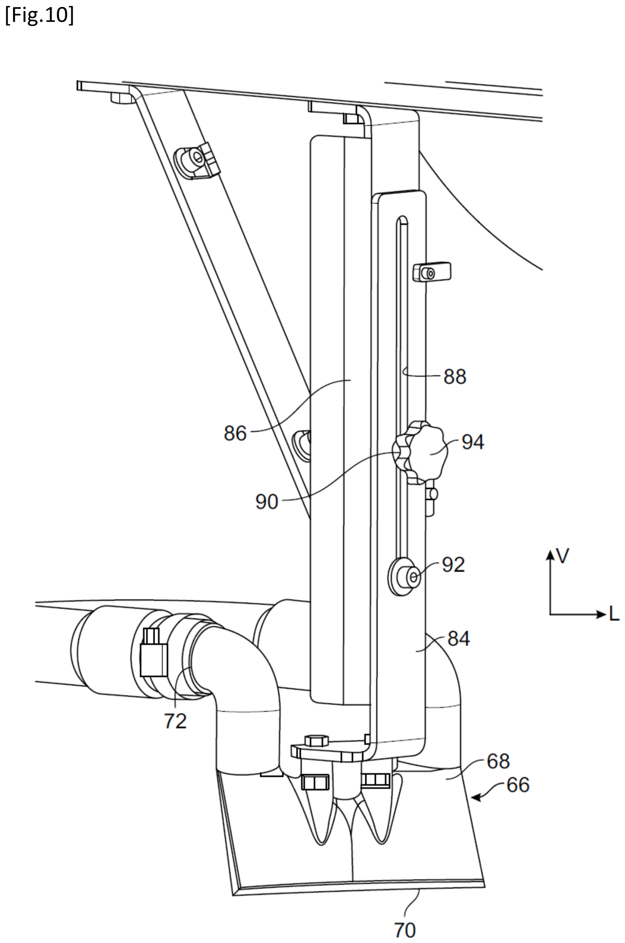

Comme représenté à la figure 10, la buse 66 d'aspiration est ici fixée sur un chariot 84 qui est lui-même monté coulissant verticalement sur un support 86. Le support 86 est fixé à l'élément 67 de structure.

Dans le mode de réalisation représenté, le chariot 84 présente une fente 88 verticale de guidage. Le support 86 comporte deux vis 90, 92 agencées dans deux orifices de fixation répartis verticalement. Les vis 90, 92 traversent la fente 88 pour permettre le guidage en coulissement.

La buse 66 d'aspiration est verrouillée dans chacune de ses positions active et inactive par un organe de blocage associé. L'organe de blocage est ici formé par la vis 90 supérieure qui peut être vissée de manière à enserrer le chariot 84 entre le support 86 et la tête de la vis 90 pour bloquer la buse 66 d'aspiration en coulissement. La vis 90 est avantageusement munie d'une molette 94 pour pouvoir être manipulée facilement sans outils.

Les déplacements de la buse 66 d'aspiration entre sa position active et sa position inactive sont ici réalisés manuellement.

En variante non représentée de l'invention, les déplacements de la buse 66 d'aspiration entre sa position active et sa position inactive sont réalisés au moyen d'un actionneur.

La buse 66 d'aspiration est de préférence réalisée en un matériau antistatique pour éviter que l'adhérence des poussières. Elle est par exemple réalisée en un matériau plastique. De préférence, le matériau est compatible avec les normes sanitaires en vigueur, il s'agit par exemple de « polyamide 11 » (PA11).

Pour pouvoir ajuster la position de la buse 66 d'aspiration radialement, notamment lorsqu'un guide 50 est remplacé par un guide 50 de dimensions différentes pour pouvoir accueillir un autre modèle de corps creux, il est prévu que la buse 66 d'aspiration soit montée réglable sur un support selon une direction orthogonale au trajet de production et dans le plan du trajet de production.

Pour éviter que l'espace de l'enceinte ne soit encombré par la tuyauterie 78 du dispositif 64 d'aspiration, la conduite 78A principale est fixé le long des parois de l'enceinte. Le collecteur 74 de poussières est ici agencé à proximité du sol, sous le dispositif 34 de convoyage et il monte le long d'un montant puis au plafond de l'enceinte. Les conduites 78B secondaires descendent depuis le plafond jusqu'à la buse 66 d'aspiration.

Le collecteur 74 de poussière est ici agencé à l'intérieur de l'enceinte 58 de l'unité 22 de formage.

En variante non représentée de l'invention, le collecteur 74 de poussière est agencé à l'extérieur de l'enceinte 58. Il est ainsi possible de le vider sans attendre un arrêt de production tout en maintenant l'intérieur de l'enceinte 58 stérile.

Les deux conduites 78B secondaires sont flexibles de manière à pouvoir accompagner le déplacement de la buse 66 d'aspiration entre ses deux positions. Le fait d'avoir deux conduites 78B secondaires de section de passage inférieure à celle de la conduite 78A principale permet d'obtenir des conduites plus souples et moins encombrantes.

En variante, la tuyauterie 78 comporte uniquement une conduite principale.

Du fait de cette disposition, en cas d'arrêt intempestif de l'aspiration, la poussière contenue dans les conduites 78B secondaires risquent de retomber vers la buse 66 d'aspiration par gravité. Pour éviter que les poussières ne retombent jusqu'à l'embouchure 70, il est prévu des chicanes 96 dans les orifices 72 de sortie pour retenir les poussières. Les chicanes 96 sont ici formées par des ailettes horizontales qui s'étendent partiellement en travers des orifices 72 de sortie, comme représenté à la figure 4.

En variante, la buse 66 ne comporte pas de chicanes ne manière à réduire les pertes de charge et ainsi augmenter la puissance d'aspiration.

Le dispositif 64 d'aspiration ainsi agencé à proximité de la face 48 de guidage située entre la sortie de l'unité de formage et la fenêtre de passage permet d'aspirer les poussières formées par frottement avec les corps creux pour éviter de contaminer l'enceinte de l'unité de remplissage.

Il est bien entendu possible d'agencer ce dispositif 64 d'aspiration sur d'autres convoyeurs de l'installation de fabrication susceptibles de générer la production de poussières par frottement des corps creux.

## Revendications

1. Installation (10) de fabrication de récipients en matériau thermoplastique, en particulier de bouteilles, l'installation (10) comportant au moins un dispositif (34) de convoyage de corps (12) creux munis d'un col (16) comportant :
- un châssis (36) fixe par rapport au sol ;
- au moins un organe (38) de préhension individuelle d'un corps (12) creux par son col (16) qui est mobile le long d'un trajet (30) de production ;
**caractérisée en ce qu'**elle comporte un dispositif (64) d'aspiration comportant au moins une buse (66) d'aspiration qui est montée sur un élément (67) de structure fixe par rapport au châssis (36) et qui est agencée à proximité d'une zone (63) déterminée du trajet des cols (16) corps (12) creux pour aspirer des poussières générées par frottement des corps (12) creux lors de leur passage dans ladite zone (63) déterminée sans interférer avec leur passage.

2. Installation (10) selon la revendication précédente, **caractérisée en ce que** la buse (66) d'aspiration présente une embouchure (70) qui présente une forme longiligne allongée parallèlement au sens de déplacement des organes (38) de préhension.

3. Installation (10) selon l'une quelconque des revendications précédentes, **caractérisé en ce que** la buse (66) d'aspiration est montée mobile sur le châssis (36) entre la position active d'aspiration dans laquelle elle est à proximité du trajet des organes (38) de préhension pour permettre l'aspiration des poussières, et une position inactive de maintenance dans laquelle elle est écartée du trajet des organes (38) de préhension.

4. Installation (10) selon la revendication précédente, **caractérisée en ce que** la buse (66) d'aspiration est guidée en coulissement selon une direction orthogonale au plan du trajet (30) de production.

5. Installation (10) selon l'une quelconque des revendications 3 ou 4, **caractérisée en ce que** les déplacements de la buse (66) d'aspiration entre sa position active et sa position inactive sont réalisés manuellement.

6. Installation (10) selon l'une quelconque des revendications 3 ou 4, **caractérisée en ce que** les déplacements de la buse (66) d'aspiration entre sa position active et sa position inactive sont réalisés automatiquement au moyen d'un actionneur.

7. Installation (10) selon l'une quelconque des revendications 3 à 6, **caractérisée en ce que** la buse (66) d'aspiration est verrouillée dans chacune de ses positions active et inactive par un organe (90) de blocage associé.

8. Installation (10) selon l'une quelconque des revendications précédentes, **caractérisée en ce que** le dispositif (34) de convoyage comporte au moins une face (48) de guidage fixe destinée à guider par contact le corps (12) creux lors de son déplacement par l'organe (38) de préhension, la zone (63) déterminée étant formée par la portion de trajet des corps (12) creux lors de laquelle les corps (12) creux sont en contact avec la face (48) de guidage.

9. Installation (10) selon l'une quelconque des revendications précédentes, **caractérisée en ce que** le dispositif (34) de convoyage comporte une roue (40) tournante sur le châssis (36) munie d'une pluralité d'organes (38) de préhension régulièrement répartis à sa périphérie.

10. Installation (10) selon la revendication précédente, **caractérisée en ce que** chaque organe (38) de préhension est formé par une encoche ouverte radialement vers l'extérieur.

11. Installation (10) selon l'une quelconque des revendications précédentes, **caractérisée en ce qu'**elle comporte une unité (22) de formage des corps (12) creux à l'état de récipient à partir de corps (12) creux à l'état de préformes, le dispositif (34) de convoyage étant agencé en aval de l'unité (22) de formage.

12. Installation (10) selon la revendication précédente, **caractérisée en ce que** l'unité (22) de formage est confinée dans une enceinte (58) de laquelle les corps (12) creux sortent par une fenêtre (62) de passage, le dispositif (34) de convoyage acheminant les corps (12) creux directement jusqu'à la fenêtre (62) de passage.
